(19) Europäisches Patentamt

European Patent Office

Office européen des brevets

(11) **EP 3 880 492 B1**

(12) **FASCICULE DE BREVET EUROPEEN**

(45) Date de publication et mention
de la délivrance du brevet:
**22.02.2023 Bulletin 2023/08**

(21) Numéro de dépôt: **19829271.6**

(22) Date de dépôt: **12.11.2019**

(51) Classification Internationale des Brevets (IPC):
***B60C 9/00*** *(2006.01)* ***D02G 3/48*** *(2006.01)*
***B60C 9/22*** *(2006.01)*

(52) Classification Coopérative des Brevets (CPC):
**B60C 9/2204; B60C 9/22; D02G 3/48;**
B60C 2009/2214; B60C 2009/2257;
B60C 2009/2266; B60C 2009/2276;
B60C 2009/2285; B60C 2200/10

(86) Numéro de dépôt international:
**PCT/FR2019/052683**

(87) Numéro de publication internationale:
**WO 2020/099774 (22.05.2020 Gazette 2020/21)**

(54) **PNEUMATIQUE POUR VÉHICULE À DEUX ROUES COMPRENANT UN RENFORT DE FRETTAGE HYBRIDE**

REIFEN FÜR ZWEIRADFAHRZEUG MIT EINER HYBRIDEN UMREIFUNGSVERSTÄRKUNG

TYRE FOR TWO-WHEELED VEHICLE COMPRISING A HYBRID HOOPING REINFORCEMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.11.2018 FR 1871513
28.01.2019 FR 1900730**

(43) Date de publication de la demande:
**22.09.2021 Bulletin 2021/38**

(73) Titulaire: **COMPAGNIE GENERALE DES
ETABLISSEMENTS MICHELIN
63000 Clermont-Ferrand (FR)**

(72) Inventeurs:
• **VILCOT, Florian
63040 CLERMONT-FERRAND CEDEX 9 (FR)**

• **LAURENT, Pierre
63040 CLERMONT-FERRAND CEDEX 9 (FR)**
• **PUCCI, Claire
63040 CLERMONT-FERRAND CEDEX 9 (FR)**
• **BABACZ, Aneta
63040 CLERMONT-FERRAND CEDEX 9 (FR)**

(74) Mandataire: **Louret, Sylvain et al
M.F.P. MICHELIN
Service juridique - Propriété Intellectuelle
DCJ/PI - F35 - Site de Ladoux
23, place des Carmes - Déchaux
63040 Clermont-Ferrand Cedex 9 (FR)**

(56) Documents cités:
**EP-A1- 2 551 127        WO-A1-2011/012980
WO-A1-2016/156263        BR-A2- PI0 803 609
JP-A- H10 278 508**

EP 3 880 492 B1

**Description**

La présente invention concerne un pneumatique pour véhicules à deux roues.

L'Invention sera plus particulièrement décrite en référence à un pneumatique pour véhicules de type moto ou motocyclettes.

On connait de l'état de la technique des pneumatiques pour véhicules moto ayant des éléments de renfort de frettage constitués d'un assemblage de nylon et d'aramide dans la demande WO2016156263.

On connait également de l'état de la technique un pneumatique pour des véhicules du type moto commercialisé sous la marque MICHELIN et appartenant à la gamme PILOT ROAD 4 et présentant des caractéristiques dimensionnelles suivantes : 120/70 ZR 17. Un tel pneumatique comprend une bande de roulement et une armature de frettage s'étendant dans le sommet selon une direction circonférentielle du pneumatique. L'armature de frettage comprend une nappe de frettage comprenant un élément de renfort de frettage formant un angle inférieur ou égal à 10° avec la direction circonférentielle du pneumatique. Chaque élément de renfort de frettage du pneumatique comprend un assemblage équilibré en torsions constitué de deux brins multifilamentaires en aramide assemblés ensemble et enroulés en hélice l'un autour de l'autre à une torsion de 440 tours par mètre. Chaque brin multifilamentaire présente un titre égal à 167 tex. Le facteur de torsion de l'élément de renfort de frettage est de 8,4. Le pneumatique est obtenu par un procédé comprenant une étape de fabrication de la nappe de frettage dans laquelle on noie l'élément de renfort de frettage adhérisé dans une composition polymérique pour former la nappe de frettage crue. Le module initial en extension équivalent de la nappe de frettage crue est de 1705 cN/tex/dm. Un tel pneumatique de l'état de la technique, de par l'utilisation de l'aramide, présente un coût relativement élevé.

D'une part, l'armature de frettage doit permettre, grâce à des propriétés à cuit de résistance mécanique adaptées, d'exercer une force de frettage suffisante du sommet du pneumatique, notamment lors du roulage à des vitesses élevées afin de garantir le maintien du profil du pneumatique et de contenir le pneumatique dans un volume maximum. Ce volume maximum est déterminé dans les conditions d'utilisation spécifiées par le manufacturier du pneumatique tel que défini dans le document « Standards Manual », 2017, de l'ETRTO (European Tyre and Rim Technical Organisation), General Information, page M.29.

D'autre part, l'armature de frettage doit permettre, grâce à des propriétés à cru de module en traction adaptées, une expansion radiale et donc, un allongement circonférentiel du sommet du pneumatique de façon à ne pas empêcher les déformations radiales et circonférentielles imposées au pneumatique lors de son procédé de fabrication. Les déformations radiales et circonférentielles sont appliquées notamment lors de la cuisson du pneumatique durant laquelle le pneumatique est expansé radialement et circonférentiellement, par exemple par mise sous pression d'une membrane de gonflage, de façon à être plaqué contre les surfaces du moule de cuisson.

En outre, le module initial en extension équivalent de la nappe de frettage crue de l'état de la technique étant relativement élevé, une petite variation de l'allongement du à la variabilité de l'étape de cuisson, engendre une forte variation du module initial en extension équivalent de la nappe de frettage crue au sein du pneumatique et donc une modification imprévisible de ses performances.

Enfin, l'armature de frettage participe à l'obtention d'une pression d'éclatement relativement élevée, ici au moins égale à 15 bars.

L'invention a pour but un pneumatique visant à :

- améliorer l'endurance,
- permettre une expansion radiale aisée et moins dépendante de la variabilité de l'étape de cuisson et
- une réduction des coûts ;

tout en garantissant les mêmes performances par rapport à un pneumatique de l'état de la technique à savoir le maintien du profil du pneumatique ainsi que la pression d'éclatement.

A cet effet, l'invention a pour objet un pneumatique pour véhicules à deux roues comprenant un sommet comprenant :

- une bande de roulement, et
- une armature de frettage s'étendant dans le sommet selon une direction circonférentielle du pneumatique, l'armature de frettage comprenant au moins une nappe de frettage comprenant un ou plusieurs éléments de renfort de frettage , le ou chaque élément de renfort de frettage formant un angle strictement inférieur à 10° avec la direction circonférentielle du pneumatique, chaque élément de renfort de frettage comprenant un assemblage constitué :

  • d'un brin multifilamentaire de polyamide aromatique ou copolyamide aromatique, et
  • d'un brin multifilamentaire de polyamide aliphatique,

les deux brins étant enroulés en hélice l'un autour de l'autre et l'élément de renfort de frettage étant équilibré en torsions, le facteur de torsion K de l'élément de renfort de frettage allant de 5,5 à 6,5 avec K défini par la formule :

K = (R × Ti$^{1/2}$) / 957 dans laquelle R est la torsion de l'élément de renfort de frettage exprimée en tours par mètre, Ti est la somme des titres des brins multifilamentaires de l'élément de renfort de frettage en tex,

et le pneumatique est obtenu par un procédé comprenant une étape de fabrication de la nappe de frettage dans laquelle on noie le ou les éléments de renfort de frettage adhérisé dans une composition polymérique pour former la nappe de frettage crue, le module initial en extension équivalent de la nappe de frettage crue allant de 330 à 620 cN/tex/dm.

De par sa construction, l'élément de renfort de frettage est un élément filaire.

Ainsi, d'une part, l'utilisation d'un élément de renfort de frettage hybride comprenant un assemblage de monofilaments en polyamide aromatique ou copolyamide aromatique et de monofilaments en polyamide aliphatique dans la nappe de frettage permet d'obtenir un pneumatique présentant un coût moindre de par l'utilisation d'un brin multifilamentaire de polyamide aliphatique qui a un coût moins élevé que celui du brin de polyamide aromatique ou copolyamide aromatique. Et d'autre part, dans l'intervalle sélectionné de facteur de torsion, l'élément de renfort de frettage va améliorer l'endurance par rapport au pneumatique de l'état de la technique tout en ayant une force à rupture équivalente et tout en maintenant le profil du pneumatique ainsi que sa pression d'éclatement.

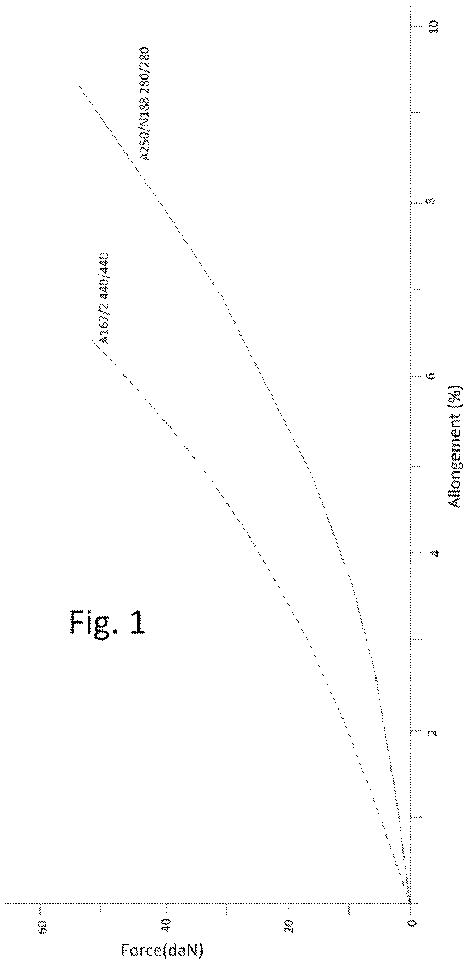

On a représenté sur la figure 1, une courbe force-allongement d'un élément de renfort de frettage du pneumatique de l'état de la technique et du pneumatique selon l'invention. Un effet d'utiliser un élément de renfort hybride comprenant un assemblage de monofilaments en polyamide aromatique ou copolyamide aromatique et de monofilaments en polyamide aliphatique est d'obtenir une courbe bi module, c'est-à-dire qui présente un module relativement faible aux faibles déformations et un module relativement élevé aux fortes déformations. En effet, d'une part, l'élément de renfort de frettage présente un module relativement faible aux faibles déformations, en l'espèce celui du brin de polyamide aliphatique, qui permet une bonne conformation du pneumatique. D'autre part, l'élément de renfort présente un module relativement élevé aux fortes déformations, en l'espèce celui du brin de polyamide aromatique ou copolyamide aromatique, qui va permettre de maintenir le profil du pneumatique.

Contrairement à l'élément de renfort de l'état de la technique, l'élément de renfort selon l'invention présente un module initial en extension équivalent de la nappe de frettage crue relativement faible. Ainsi, même dans le cas d'une variabilité de l'allongement de l'élément de renfort lors de l'étape de cuisson, la variation du module initial en extension équivalent de la nappe de frettage crue de l'élément de renfort au sein du pneumatique demeure faible et ne modifie pas ou peu les performances du pneumatique.

Par filament en polyamide aromatique ou copolyamide aromatique, on rappelle de manière bien connue qu'il s'agit d'un filament de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les méta-aramides (ou poly(métaphénylène isophtalamide ou PA MPD-I notamment connu sous la dénomination commerciale Nomex de la société Du Pont de Nemours) ou les para-aramides (ou poly(paraphénylène téréphtalamide ou PA PPD-T notamment connu sous la dénomination commerciale Kevlar de la société Du Pont de Nemours ou Twaron de la société Teijin).

Par filament en polyamide aliphatique, on entend un filament de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema..

Par équilibré en torsions, on comprend que les deux brins multifilamentaires sont enroulés avec une torsion sensiblement identique et que la torsion des monofilaments de chaque brin multifilamentaire, c'est-à-dire la torsion des monofilaments du brin multifilamentaire de polyamide ou copolyamide aromatique et la torsion des monofilaments du brin de polyester est sensiblement nulle. En effet, le procédé de fabrication de ces éléments de renforts de frettage, bien connu de l'état de la technique, comprend une première étape durant laquelle, chaque filé de monofilaments (en anglais « yarn ») est tout d'abord individuellement tordu sur lui-même (selon une torsion initiale R1' et R2' avec R1'=R2') dans une direction donnée D'=D1'=D2' (respectivement sens S ou Z, selon une nomenclature reconnue désignant l'orientation des spires selon la barre transversale d'un S ou d'un Z), pour former un brin ou surtors (en anglais « strand ») dans lequel les monofilaments se voient imposer une déformation en hélice autour de l'axe du brin. Puis, au cours d'une seconde étape, les deux brins, sont ensuite retordus ensemble selon une torsion finale R3 telle que R3=R1'=R2' en direction D3 opposée à la direction D'=D1'=D2' (respectivement sens Z ou S), pour l'obtention de l'élément de renfort (en anglais « cord »). Cet élément de renfort est alors dit équilibré en torsion car les monofilaments des deux brins

présent, dans l'élément de renfort final, la même torsion résiduelle car R1'=R2'. Cette torsion résiduelle est nulle ou sensiblement nulle car R3=R1'=R2' et la direction D'=D1'=D2' est opposée à la direction D3. Par torsion résiduelle sensiblement nulle, on entend que la torsion résiduelle est strictement inférieure à 2,5% de la torsion R3.

Par assemblage constitué, on entend que l'assemblage ne comprend pas d'autre brin multifilamentaire que les deux brins multifilamentaires de polyamide aromatique ou copolyamide aromatique et de polyamide aliphatique.

Le brin multifilamentaire de polyamide aromatique ou copolyamide aromatique et le brin multifilamentaire de polyamide aliphatique sont assemblés ensemble et sont enroulés en hélice l'un autour de l'autre.

Le facteur de torsion, ci-après désigné par la lettre K (appelé Twist Multiplier en anglais) est défini par la formule:

$$K = (R \times Ti^{1/2}) / 957$$

dans laquelle R est la torsion de l'élément de renfort exprimée en tours par mètre (torsion R3 décrite ci-dessus) et Ti est la somme des titres des brins multifilamentaires de l'élément de renfort en tex.

La mesure de la torsion R de l'élément de renfort peut être réalisée par toute méthode connue par l'homme du métier, par exemple conformément à la norme ASTM D 885/D 885M - 10a de 2014.

Le titre (ou densité linéique) de chaque brin est déterminé selon la norme ASTM D1423. Le titre est donné en tex (poids en grammes de 1000 m de produit - rappel: 0, 111 tex égal à 1 denier).

Un élément de renfort écru est tel que le ou les matériaux constituants l'élément de renfort sont issus de fabrication sans qu'aucun revêtement ayant une fonction d'adhésion ne vienne recouvrir ce ou ces matériaux. Ainsi, un élément de renfort écru peut être nu, c'est-à-dire que le ou les matériaux constituants l'élément de renfort ne sont revêtus d'aucun revêtement ou bien éventuellement être ensimé, c'est-à-dire revêtu d'une composition d'ensimage ayant notamment pour fonctions de faciliter le glissement du ou des matériaux constituants l'élément de renfort lors de son procédé de fabrication et d'éviter l'accumulation des charges électrostatiques.

Par élément de renfort de frettage adhérisé , on entend que lors de la fabrication de l'élément de renfort de frettage, l'assemblage constitué des deux brins multifilamentaires constituants l'élément de renfort de frettage est recouvert d'un revêtement ayant une fonction d'adhésion.

Ainsi, dans un premier mode de réalisation, on assemble de façon à former l'élément de renfort de frettage écru, on revêt l'élément filaire de renfort de frettage écru d'une couche externe d'une composition adhésive thermoréticulable et on traite thermiquement l'élément de renfort de frettage écru revêtu de la couche externe de façon à réticuler la composition adhésive pour obtenir l'élément de renfort de frettage adhérisé.

Dans un deuxième mode de réalisation, on revêt l'élément de renfort de frettage écru d'une couche intermédiaire d'une première composition adhésive thermoréticulable, on traite thermiquement l'élément de renfort de frettage écru revêtu de la couche intermédiaire de façon à réticuler la première composition adhésive pour obtenir un élément de renfort de frettage pré-adhérisé, on revêt l'élément de renfort de frettage pré-adhérisé d'une couche externe d'une deuxième composition adhésive thermoréticulable et on traite thermiquement l'élément de renfort de frettage pré-adhérisé revêtu de la couche externe de façon à réticuler la deuxième composition adhésive pour obtenir l'élément de renfort de frettage adhérisé.

Dans un mode de réalisation avantageux, ce revêtement est une composition adhésive. Une telle composition adhésive est par exemple de type RFL (acronyme pour Résorcinol-Formaldéhyde-Latex).

Par module initial en extension équivalent de la nappe de frettage crue, on entend le module calculé en multipliant le module initial en extension de l'élément de renfort de frettage adhérisé en cN/tex par la densité de la nappe de frettage en nombre de fils d'éléments de renfort de frettage par décimètre.

La densité d'éléments de renfort de frettage adhérisé dans la nappe de frettage est le nombre d'éléments de renfort de frettage adhérisé pris sur un décimètre de la nappe de frettage selon la direction perpendiculaire à la direction selon laquelle le ou les éléments de renfort de frettage adhérisé s'étendent.

Par module initial en extension de l'élément de renfort de frettage adhérisé, on entend la pente à l'origine de la partie linéaire de la courbe Force-Allongement obtenue dans les conditions de la norme ASTM D 885/D 885M - 10a de 2014, qui intervient juste après une prétension standard de 0,5 cN/tex de l'élément de renfort de frettage c'est-à-dire avant réticulation.

Dans un mode de réalisation avantageux, le ou les éléments de renfort de frettage adhérisé s'étendent parallèlement les uns aux autres.

Dans la description et les revendications, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par direction axiale, on entend la direction sensiblement parallèle à l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque intersectant l'axe de rotation du pneumatique et sensiblement perpendiculairement à cet axe.

Par plan médian (noté M), on entend le plan perpendiculaire à l'axe de rotation du pneumatique qui est situé à mi-distance des deux bourrelets et passe par le milieu de l'armature de sommet.

Le plan circonférentiel équatorial (noté E) du pneumatique est le plan théorique passant par l'équateur du pneumatique, perpendiculaire au plan médian et à la direction radiale. L'équateur du pneumatique est, dans un plan de coupe circonférentielle (plan perpendiculaire à la direction circonférentielle et parallèle aux directions radiale et axiales) l'axe parallèle à l'axe de rotation du pneumatique et située sur le plan passant par les extrémités radialement intérieures de la bande de roulement.

Avantageusement, les éléments de renfort de frettage sont noyés dans une composition polymérique.

Par composition de polymère ou composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères.

Avantageusement, le facteur de torsion K de l'élément de renfort de frettage va de 5,7 à 6,4, de préférence de 5,9 à 6,3 et plus préférentiellement de 6,0 à 6,2.

Ainsi, sur cette plage de facteur de torsion, l'élément de renfort de frettage va permettre au pneumatique d'avoir une endurance améliorée tout en garantissant le maintien du profil du pneumatique ainsi que la pression d'éclatement.

Avantageusement, le module initial en extension équivalent de la nappe de frettage crue va de 380 à 600 cN/tex/dm et de préférence de 400 à 550 cN/tex/dm et plus préférentiellement de 420 à 520 cN/tex/dm.

Ainsi, dans cet intervalle de module initial en extension équivalent de la nappe de frettage crue, le module aux faibles déformations est abaissé par rapport à celui de l'élément de renfort de frettage de l'état de la technique comprenant deux brins d'aramide du fait de la présence du brin de polyamide aliphatique qui permet une bonne expansion radiale de la nappe de frettage et donc, un allongement circonférentiel aisé du sommet du pneumatique. Ainsi, cet intervalle de module initial permet une bonne conformation du pneumatique.

Avantageusement, la torsion de l'élément de renfort de frettage va de 240 à 350 tours par mètre et de préférence de 240 à 300 tours par mètre.

Pour un titre donné, dans cet intervalle de torsion, l'élément de renfort de frettage présente une endurance suffisante pour être utilisé dans un pneumatique pour véhicules à deux roues et un risque de dispersion de sa force à rupture plus faible par rapport au pneumatique de l'état de la technique où la torsion est relativement élevée.

Avantageusement, le titre du brin multifilamentaire de polyamide aromatique ou copolyamide aromatique est supérieur ou égal à 180 tex, de préférence supérieur ou égal à 200 tex, plus préférentiellement supérieur ou égal à 220 tex et encore plus préférentiellement supérieur ou égal à 240 tex.

Avantageusement, le titre du brin multifilamentaire de polyamide aromatique ou copolyamide aromatique est inférieur ou égal à 350 tex, de préférence inférieur ou égal à 330 tex, plus préférentiellement inférieur ou égal à 300 tex et encore plus préférentiellement inférieur ou égal à 260 tex.

Dans l'intervalle de facteur de torsion conforme à l'invention, en utilisant des titres inférieurs aux intervalles décrits ci-dessus, l'élément de renfort présenterait une torsion relativement élevée ce qui conduirait à un risque de dispersion de la force à rupture. A l'inverse, en utilisant des titres supérieurs aux intervalles décrits ci-dessus, l'élément de renfort présenterait une torsion relativement faible ce qui conduirait un risque de diminution de l'endurance. Ainsi, les intervalles de titre du brin multifilamentaire de polyamide aromatique ou copolyamide aromatique décrits ci-dessus permettent d'obtenir préférentiellement un bon compromis force à rupture-endurance.

Avantageusement, le titre du brin multifilamentaire de polyamide aliphatique est supérieur ou égal à 150 tex, de préférence supérieur ou égal à 160 tex, plus préférentiellement supérieur ou égal à 170 tex et encore plus préférentiellement supérieur ou égal à 180 tex.

Avantageusement, le titre du brin multifilamentaire de polyamide aliphatique est inférieur ou égal à 300 tex, de préférence inférieur ou égal à 280 tex, plus préférentiellement inférieur ou égal à 250 tex et encore plus préférentiellement inférieur ou égal à 220 tex.

De façon analogue au titre du brin multifilamentaire de polyamide aromatique ou copolyamide aromatique, dans les intervalles de titres du brin multifilamentaire de polyamide aliphatique décrit ci-dessus, l'élément de renfort de frettage présente préférentiellement un bon compromis force à rupture-endurance.

Avantageusement, le module initial en extension de l'élément de renfort de frettage adhérisé va de 4,5 à 6,2 cN/tex et de préférence de 4,6 à 6,0 cN/tex.

Ainsi, comme expliqué précédemment, dans cet intervalle de module initial en extension de l'élément de renfort adhérisé, le module aux faibles déformations est abaissé du fait de la présence du brin de polyamide aliphatique, ce qui permet une bonne expansion radiale de la nappe de frettage.

De préférence, la densité d'éléments de renfort de frettage dans la nappe de frettage va de 60 à 110 éléments de renfort de frettage par décimètre de nappe de frettage, de préférence de 75 à 105 éléments de renfort de frettage par décimètre de nappe de frettage et plus préférentiellement de 85 à 95 éléments de renfort de frettage par décimètre de nappe de frettage.

Dans ces intervalles de densité d'éléments de renfort de frettage, la nappe de frettage présente une force à rupture relativement élevée permettant son utilisation dans des pneumatiques pour véhicules à deux roues et un coût relativement bas en raison d'une part, de la présence de moins d'éléments de renfort par rapport à la nappe de frettage de l'état de la technique à force à rupture de nappe de frettage sensiblement équivalente et d'autre part, de par la présence du brin de polyamide aliphatique.

Avantageusement, la force à rupture de l'élément de renfort de frettage va de 40 à 70 daN et de préférence de 45 à 65 daN.

Avantageusement, la force à rupture de la nappe de frettage va de 360 à 630 daN/cm et de préférence de 405 à 585 daN/cm.

On calcule la force à rupture d'une nappe à partir d'une courbe force-allongement obtenue en appliquant la norme ASTM D 885/D 885M - 10a de 2014 à un élément de renfort de frettage. On détermine la force à rupture de la nappe de frettage en multipliant la force à rupture de l'élément de renfort de frettage par le nombre d'éléments de renfort de frettage par cm de nappe de frettage, ce nombre étant déterminé selon une direction perpendiculaire à la direction selon laquelle les éléments de renfort de frettage s'étendent dans la nappe de frettage.

Avantageusement, le pneumatique selon l'invention comprend deux flancs, deux bourrelets, chaque flanc reliant chaque bourrelet au sommet, une armature de carcasse agencée radialement à l'intérieur du sommet, l'armature de carcasse comprend au moins une nappe de carcasse ancrée dans chacun des bourrelets et s'étendant dans les flancs, dans lequel l'armature de frettage est radialement intercalée entre l'armature de carcasse et la bande de roulement.

Avantageusement, l'armature de frettage est directement au contact de la bande de roulement et de l'armature de carcasse.

Par directement au contact, on entend qu'aucune autre nappe renforcée par des éléments de renfort métalliques ou textiles n'est agencée radialement entre la bande de roulement et l'armature de frettage, ni entre l'armature de frettage et l'armature de carcasse. Dans un mode de réalisation, une composition est déposée entre les nappes pour augmenter le collant à cru (en anglais « tack ») entre l'armature de frettage et l'armature de carcasse et de la même façon, une composition est déposée entre les nappes pour augmenter le collant à cru entre la bande de roulement et l'armature de frettage.

Avantageusement, le taux de courbure du pneumatique va de 0,15 à 0,40 et de préférence de 0,20 à 0,30.

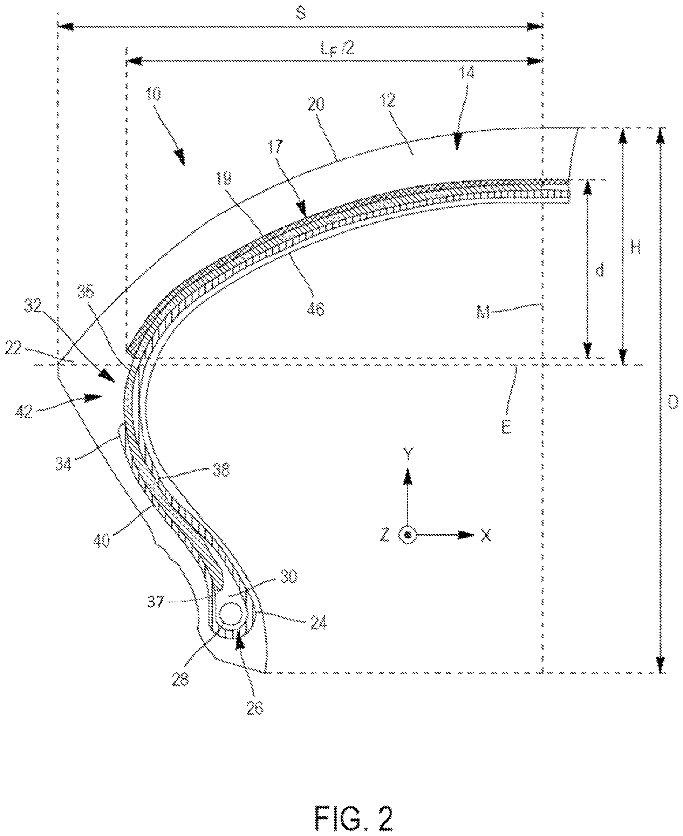

Comme on peut le voir à partir du pneumatique pour véhicules à deux roues représenté sur la figure 2, le pneumatique pour véhicules à deux roues a une bande de roulement très cintrée, ayant une courbure marquée.

En particulier, cette courbure est exprimée par la valeur du taux de courbure H / 2S, où H représente la hauteur radiale de la bande de roulement par rapport au plan circonférentiel équatorial E passant par les extrémités radialement intérieures de ladite bande de roulement, et 2S représente la largeur axiale maximale de ladite bande de roulement, comme représenté sur la figure 2.

En raison du taux de courbure important et du fait que l'armature de frettage s'étende au droit de la quasi-totalité de la bande de roulement, la hauteur radiale de la nappe de frettage est relativement importante.

Avantageusement, le rapport de la hauteur radiale d selon laquelle la nappe de frettage s'étend radialement dans le pneumatique sur la hauteur radiale D selon laquelle le pneumatique s'étend radialement est supérieur ou égal à 10% et de préférence supérieur ou égal à 20%.

Avantageusement, l'armature de frettage est constituée d'une seule nappe de frettage.

Avantageusement, le ou chaque élément de renfort de frettage fait un angle inférieur ou égal à 7° et de préférence inférieur ou égal à 5° avec la direction circonférentielle du pneumatique.

Dans un mode de réalisation, l'armature de carcasse est constituée de deux nappes de carcasse.

Ainsi, du fait de la présence de ces deux nappes de carcasse, la rigidité latérale va augmenter, l'aire de contact avec le sol va diminuer et permettre ainsi une meilleure réponse à la conduite du véhicule à deux roues en raison d'efforts plus faibles exercés par le pneumatique sur le guidon.

Dans un autre mode de réalisation, l'armature de carcasse est constituée d'une seule nappe de carcasse.

Ainsi, la présence d'une seule nappe de carcasse permet d'obtenir un pneumatique dont l'armature de carcasse est plus souple qu'un pneumatique dont l'armature de carcasse comprend plusieurs nappes de carcasse. Ainsi, on limite la raideur verticale du pneumatique et on augmente donc le confort du véhicule sur lequel est monté le pneumatique.

Chaque nappe de carcasse comprend plusieurs éléments filaires de renfort de carcasse.

Dans un mode de réalisation avantageux, chaque élément filaire de renfort de carcasse est un élément filaire textile.

Par textile, on entend par définition un élément filaire non-métallique constitué d'un ou plusieurs monofilament élémentaire textile éventuellement revêtu d'une ou plusieurs couches d'un revêtement à base d'une composition adhésive. Chaque monofilament élémentaire textile est obtenu, par exemple, par filage au fondu, filage en solution ou filage de gel. Chaque monofilament élémentaire textile est réalisé dans un matériau organique, notamment polymérique, ou inorganique, comme par exemple le verre ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

De préférence, chaque élément filaire de renfort de carcasse s'étend axialement d'un bourrelet du pneumatique à l'autre bourrelet du pneumatique.

.

Avantageusement, la nappe de carcasse comprend au moins un élément de renfort de carcasse, l'angle de chaque élément renfort de carcasse va de 65° à 90° avec la direction circonférentielle du pneumatique.

Avantageusement, le pneumatique comprend un élément de renfort de frettage comprenant un assemblage constitué :

- • d'un brin multifilamentaire d'aramide ayant un titre qui va de 230 à 270 tex et

- • d'un brin multifilamentaire de polyamide 6,6 ayant un titre qui va de 168 à 215 tex

les deux brins étant enroulés en hélice l'un autour de l'autre et l'élément de renfort étant équilibré en torsions et la torsion de l'élément de renfort allant de 260 à 300 tours par mètre.

Plus avantageusement, le pneumatique comprend un élément de renfort de frettage comprenant un assemblage constitué :

- • d'un brin multifilamentaire d'aramide ayant un titre qui va de 240 à 260 tex et
- • d'un brin multifilamentaire de polyamide 6,6 ayant un titre qui va de 178 à 198 tex

les deux brins étant enroulés en hélice l'un autour de l'autre et l'élément de renfort étant équilibré en torsions et la torsion de l'élément de renfort allant de 270 à 290 tours par mètre.

L'invention sera mieux comprise à la lumière de la description qui va suivre donnée uniquement à titre d'exemple non limitatif et faite en se référant aux dessins dans lesquels :

- la figure 1 est une courbe force-allongement d'un élément de renfort de frettage de l'état de la technique et de celui du pneumatique selon l'invention ;
- la figure 2 illustre un pneumatique pour véhicules à deux roues selon l'invention ;
- la figure 3 est une représentation schématique d'éléments de renfort de frettage de la nappe de frettage du pneumatique de la figure 2.

## EXEMPLE DE PNEUMATIQUE SELON L'INVENTION

Sur la figure 2, on a représenté un repère X, Y, Z correspondant aux directions habituelles respectivement axiale (X), radiale (Y) et circonférentielle (Z) d'un pneumatique.

On a représenté sur la figure 2 un pneumatique conforme à l'invention et désigné par la référence générale 10. Le pneumatique 10 est sensiblement de révolution autour d'un axe sensiblement parallèle à la direction axiale X. Le pneumatique 10 est ici destiné à un véhicule à deux roues.

Le pneumatique 10 comporte un sommet 12 comprenant une bande de roulement 20 et une armature de sommet 14 s'étendant dans le sommet 12 selon la direction circonférentielle Z.

L'armature de sommet 14 comprend une armature de frettage 17 comprenant une unique nappe de frettage 19. Ici, l'armature de frettage 17 est constituée de la nappe de frettage 19.

L'armature de sommet 14 est surmontée de la bande de roulement 20. Le pneumatique 10 comprend deux flancs 22 prolongeant le sommet 12 radialement vers l'intérieur. Le pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est située radialement entre l'armature de carcasse 32 et la bande de roulement 20. Chaque flanc 22 relie chaque bourrelet 24 au sommet 12.

Le taux de courbure du pneumatique va de 0,15 à 0,40 et de préférence de 0,20 à 0,30. Ici le taux de courbure est de 0,25.

Le rapport de la hauteur d selon laquelle la nappe de frettage 19 s'étend radialement dans le pneumatique 10 sur la hauteur D selon laquelle le pneumatique 10 s'étend radialement est supérieur ou égal à 10% et de préférence supérieur ou égal à 20%. Ici le rapport d/D est de 53%.

Dans un mode de réalisation non illustré ici, l'armature de carcasse comprend une unique nappe de carcasse. Dans ce mode de réalisation non illustré ici, l'armature de carcasse est préférentiellement constituée par une nappe de carcasse.

Ici, l'armature de carcasse 32 comporte deux nappes de carcasse 34, 35. La nappe de carcasse 34, dite retournée, est ancrée dans chacun des bourrelets 24 par un retournement autour de la tringle 28 de manière à former dans chaque bourrelet 24 un brin aller 38 s'étendant depuis les bourrelets 24 dans les flancs 22 et dans le sommet 12, et un brin retour 40, l'extrémité radialement extérieure 42 du brin retour 40 étant radialement à l'extérieur de la structure annulaire de renfort 26.

La nappe de carcasse 35 est ancrée dans chacun des bourrelets 24 sans retournement autour de la tringle 28. La nappe de carcasse 35 est dite embarrée.
L'extrémité radialement intérieure 37 de la nappe carcasse 35 est radialement intérieure à l'extrémité 42 du brin retour 40 de la nappe de carcasse 34. De plus, l'extrémité radialement intérieure 37 de la nappe carcasse 35 est axialement comprise entre le brin aller 38 et le brin retour 40 de la nappe de carcasse 34.

L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12.

L'armature de frettage 17 est radialement intercalée entre l'armature de carcasse 32 et la bande de roulement 20. Ici, l'armature de frettage 17 est directement au contact de la bande de roulement 20 et de l'armature de carcasse 32.

Avantageusement, chaque nappe de carcasse 34, 35comprend des éléments filaires de renfort de carcasse.

De préférence, chaque élément filaire de renfort de carcasse est un élément filaire textile. De préférence, chaque élément filaire de renfort de carcasse s'étend axialement d'un bourrelet 24 du pneumatique 10 à l'autre bourrelet 24 du pneumatique 10.

L'armature de carcasse 32 est radiale dans chaque flanc 22 et dans le sommet 12. Ainsi, chaque élément de renfort de carcasse fait un angle allant de 65° à 90° avec la direction circonférentielle Z du pneumatique 10, ici 72° dans le sommet du pneumatique.

Ici, l'élément filaire de renfort de carcasse comprend deux brins comprenant au moins un monofilament, en l'espèce un premier brin multifilamentaire comprenant plusieurs monofilaments et deuxième brin multifilamentaire comprenant plusieurs monofilaments.

En l'espèce, les monofilaments des premier et deuxième brins sont réalisés dans un matériau choisi choisi parmi les polyamides aromatiques, les copolyamides aromatiques, les polycétones, les polyesters, les polyamides aliphatiques, les celluloses et les mélanges de monofilaments de ces matériaux et ici en polyester.

Le pneumatique 10 comprend également une couche interne 46 d'étanchéité, de préférence en butyl, située axialement intérieure aux flancs 22 et radialement intérieure à l'armature de sommet 14 et s'étendant entre les deux bourrelets 24.

Chaque nappe de frettage 19 et de carcasse 34, 35 comprend une matrice élastomérique dans laquelle sont noyés un ou des éléments de renfort de frettage de la nappe correspondante.

L'unique nappe de frettage 19 comprend au moins un élément filaire textile de renfort de frettage 44. En l'espèce, la nappe de frettage 19 comprend un unique élément de renfort de frettage 44 enroulé continûment sur une largeur axiale $L_F$ du sommet 12 du pneumatique 10.

L'élément de renfort de frettage 44 fait un angle strictement inférieur à 10°, de préférence inférieur ou égal à 7° et plus préférentiellement inférieur ou égal à 5° avec la direction circonférentielle Z du pneumatique 10 et ici inférieur à 1 °.

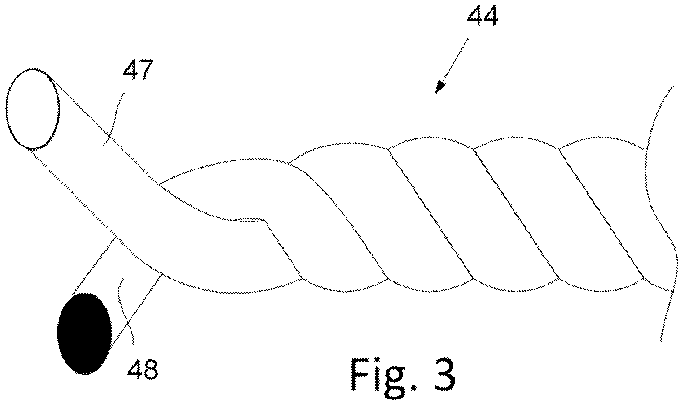

L'élément de renfort de frettage 44, illustré sur la figure 3, comprend au moins un premier brin 47 comprenant au moins un monofilament, en l'espèce un premier brin multifilamentaire comprenant plusieurs monofilaments.

En l'espèce, les monofilaments du premier brin 47 sont réalisés dans un matériau choisi parmi les polyamides ou copolyamides aromatiques et plus préférentiellement ici réalisés en para-aramide.

L'élément filaire textile de renfort de frettage 44 comprend également au moins un deuxième brin 48 comprenant au moins un monofilament, en l'espèce un deuxième brin multifilamentaire comprenant plusieurs monofilaments.

En l'espèce, les monofilaments du deuxième brin 48 sont réalisés dans un matériau choisiparmi les polyamides aliphatiques et plus préférentiellement ici réalisés en nylon 6.6.

Les deux brins sont enroulés en hélice l'un autour de l'autre et l'élément de renfort de frettage 44 est équilibré en torsions, le facteur de torsion K de l'élément de renfort de frettage 44 va de 5,5 à 6,5, de préférence de 5,7 à 6,4, plus préférentiellement de 5,9 à 6,3 et encore plus préférentiellement de 6,0 à 6,2. Il est ici de 6,1.

Le pneumatique 10 est obtenu par un procédé comprenant une étape de fabrication de la nappe de frettage 19 dans laquelle on noie le ou les éléments de renfort de frettage adhérisé 44 dans une composition polymérique pour former la nappe de frettage crue, le module initial en extension équivalent de la nappe de frettage crue allant de 330 à 620 cN/tex/dm, de préférence de 380 à 600 cN/tex/dm, plus préférentiellement de 400 à 550 cN/tex/dm et encore plus préférentiellement de 420 à 520 cN/tex/dm. Il est ici de 486 cN/tex/dm.

La torsion de l'élément de renfort de frettage 44 va de 240 à 350 tours par mètre et de préférence de 240 à 300 tours par mètre. Elle est ici de 280 tours par mètre.

Le titre du brin multifilamentaire de polyamide aromatique ou copolyamide aromatique 47 est supérieur ou égal à 180 tex, de préférence supérieur ou égal à 200 tex, plus préférentiellement supérieur ou égal à 220 tex et encore plus préférentiellement supérieur ou égal à 240 tex et le titre du brin multifilamentaire de polyamide aromatique ou copolyamide aromatique 47 est inférieur ou égal à 350 tex, de préférence inférieur ou égal à 330 tex, plus préférentiellement inférieur ou égal à 300 tex et encore plus préférentiellement inférieur ou égal à 260 tex. Il est ici de 250 tex.

Le titre du brin multifilamentaire de polyamide aliphatique est supérieur ou égal à 150 tex, de préférence supérieur ou égal à 160 tex, plus préférentiellement supérieur ou égal à 170 tex et encore plus préférentiellement supérieur ou égal à 180 tex et le titre du brin multifilamentaire de polyamide aliphatique est inférieur ou égal à 300 tex, de préférence inférieur ou égal à 280 tex, plus préférentiellement inférieur ou égal à 250 tex et encore plus préférentiellement inférieur ou égal à 220 tex. Il est ici de 188 tex.

Le module initial en extension de l'élément de renfort de frettage adhérisé 44 va de 4,5 à 6,2 cN/tex et de préférence de 4,6 à 6,0 cN/tex. Il est ici de 5,0 cN/tex.

La densité d'éléments de renfort de frettage 44 dans la nappe de frettage 19 va de 60 à 110 éléments de renfort de frettage 44 par décimètre de nappe de frettage 19, de préférence de 75 à 105 éléments de renfort de frettage 44 par décimètre de nappe de frettage 19 et plus préférentiellement de 85 à 95 éléments de renfort de frettage 44 par décimètre de nappe de frettage 19. Elle est ici de 90 fils par décimètre de nappe de frettage 19.

La force à rupture de l'élément de renfort de frettage 44 va de 40 à 70 daN et de préférence de 45 à 65 daN. Elle est ici de 54 daN.

La force à rupture de la nappe de frettage 19 va de 360 à 630 daN/cm et de préférence de 405 à 585 daN/cm. Elle est ici de 486 daN/cm.

## Procédé de fabrication du pneumatique

On fabrique le pneumatique 10 selon le procédé décrit ci-dessous.

Tout d'abord, on fabrique la nappe de carcasse 34 en agençant parallèlement les uns aux autres les éléments de renfort de chaque nappe et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments filaires textiles de renfort de la nappe sont parallèles les uns aux autres et sont parallèles à la direction principale de la nappe. Puis, si nécessaire, on découpe des portions de chaque nappe droite selon un angle de découpe et on aboute ces portions les unes aux autres de façon à obtenir une nappe dite à angle, dans laquelle les éléments filaires textiles de renfort de la nappe sont parallèles les uns aux autres et forment un angle avec la direction principale de la nappe égal à l'angle de découpe.

Puis, on met en oeuvre un procédé d'assemblage tel que décrit dans EP1623819 ou bien dans FR1413102.

Lors de ce procédé d'assemblage, on agence l'armature de frettage 17, ici la nappe de frettage 19, radialement à l'extérieur de l'armature de carcasse 32. En l'espèce, dans une première variante, on fabrique une bandelette de largeur B significativement inférieure à $L_F$, dans laquelle l'élément de renfort de frettage adhérisé 44 est noyé dans une composition non réticulée et on enroulé hélicoïdalement la bandelette sur plusieurs tours de façon à obtenir la largeur axiale $L_F$. Dans une deuxième variante, on fabrique la nappe de frettage 19 présentant une largeur $L_F$ d'une façon analogue aux nappes de carcasse et on enroule sur un tour la nappe de frettage 19 sur l'armature de carcasse 32. Dans une troisième variante, on enroule l'élément de renfort de frettage adhérisé 44 radialement à l'extérieur de la nappe de carcasse 32, puis on dépose dessus une couche d'une composition dans laquelle sera noyé l'élément de renfort de frettage 44 lors de la cuisson du pneumatique. Dans les trois variantes, on noie l'élément de renfort de frettage adhérisé 44 dans une composition pour former, à l'issue du procédé de fabrication du pneumatique, la nappe de frettage 19 comprenant l'élément de renfort de frettage 44.

Après une étape de pose de la bande de roulement 20, on obtient alors le pneumatique dans lequel les compositions des matrices élastomériques ne sont pas encore réticulées et sont dans un état cru. On parle alors d'une ébauche crue du pneumatique.

Enfin, on réticule les compositions, par exemple par cuisson ou vulcanisation, afin d'obtenir le pneumatique dans lequel les compositions présentent un état réticulé. Lors de cette étape de cuisson, on expanse radialement, circonférentiellement et axialement le pneumatique dont les matrices élastomériques sont à l'état cru, par exemple par mise sous pression d'une membrane de gonflage, de façon à plaquer le pneumatique contre des surfaces d'un moule de cuisson. Cette expansion radiale et circonférentielle est ici avantageusement mise en oeuvre grâce aux éléments filaires de renfort de frettage adhérisés.

**MESURES ET TESTS COMPARATIFS**

**Comparaison des éléments de renfort de frettage**

On a résumé dans le tableau 1 les caractéristiques des éléments de renfort de frettage 44 et 45 des pneumatiques 10 et 10' selon l'invention, des éléments de renfort de frettage E1 à E5 témoin et des éléments de renfort de frettage EdTA et EdTB de l'état de la technique.

| Elément de renfort de frettage | EdTA | EdTB | E1 | E2 | E3 | E4 | E5 | 44 | 45 |
|---|---|---|---|---|---|---|---|---|---|
| Nature des brins | P-Aramide/2 | P-Aramide/2 | P-Aramide/Nylon | P-Aramide/Nylon | P-Aramide/Nylon | P-Aramide/Nylon | P-Aramide/Nylon | P-Aramide/Nylon | P-Aramide/Nylon |
| Torsion (t/m) | 440 | 315 | 200 | 250 | 290 | 210 | 230 | 280 | 260 |
| Titre des brins (tex) | 167/167 | 167/167 | 167/140 | 167/140 | 167/140 | 250/188 | 250/188 | 250/188 | 250/188 |
| Facteur de torsion K | 8,4 | 6,0 | 3,7 | 4,6 | 5,3 | 4,6 | 5,0 | 6,1 | 5,7 |
| Module initial (cN/tex) | 14,7 | 15 | 8,4 | 7,2 | 5,9 | 6,7 | 6,0 | 5,0 | 5,6 |
| FR (daN) | 52 | 57 | 36 | 36 | 40 | ≥57 | ≥57 | 54 | ≥57 |
| Nappe de frettage | NdTA | NdTB | N1 | N2 | N3 | N4 | N5 | 19 | 19' |
| Densité (fils/dm) | 116 | 116 | 116 | 116 | 116 | 116 | 116 | 90 | 90 |
| Module initial équivalent (cN/tex/dm) | 1705 | 1740 | 974 | 835 | 684 | 777 | 696 | 450 | 504 |
| FR (daN/cm) | 603 | 661 | 418 | 418 | 464 | ≥661 | ≥661 | 486 | ≥513 |

Tableau 1

On note que les éléments de renfort de frettage 44 et 45 présentent des modules initiaux significativement inférieurs à ceux des éléments de renfort de frettage de l'état de la technique EdTA et EdTB. En effet, les éléments de renfort de frettage 44, 45 des pneumatiques selon l'invention présentent un module relativement faible aux faibles déformations permettant une bonne expansion radiale de la nappe.

La force à rupture des éléments de renfort de frettage 44 et 45 est suffisamment élevée afin de de contenir le pneumatique dans un volume maximum et participe à l'obtention d'une pression d'éclatement relativement élevée. En outre, cette force à rupture de l'élément de renfort de frettage est satisfaisante pour lutter contre les aléas routiers (appelés en anglais « road hazard ») du type chocs trottoirs, nid de poule etc...

De la même façon, la force à rupture de la nappe de frettage est suffisamment élevée afin de maintenir le profil du pneumatique, d'obtenir une pression d'éclatement relativement élevée et pour lutter contre les aléas routiers.

## Comparaison des pneumatiques

On a comparé le pneumatique 10 selon l'invention à des pneumatiques PEdTA et PEdTB de l'état de la technique comprenant chacun respectivement une nappe de frettage NdTA et NdTB obtenue à partir respectivement des éléments de renfort de frettage adhérisés de l'état de la technique EdTA et EdTB.

**On** a comparé le pneumatique 10 selon l'invention comprenant une nappe de frettage 19 obtenue à partir de l'élément de renfort de frettage adhérisé 44 à des pneumatiques P1 à P3 témoins comprenant chacun respectivement une nappe de frettage N1 à N3 obtenue à partir respectivement des éléments de renfort de frettage adhérisés témoins E1 à E3.

On a tout d'abord comparé entre elles, d'une part, les tenues géométriques des pneumatiques PEdTA, PEdTB et 10 et d'autre part les tenues géométriques des pneumatiques P1 à P3 et 10 en évaluant la tenue en dimension du pneumatique par le rayon centrifuge tel que défini dans le document « Standards Manual », 2017, de l'ETRTO (European Tyre and Rim Technical Organisation), General Notes, page M.6.

Puis, on a comparé entre elles, d'une part, les résistances aux pressions d'éclatement des pneumatiques PEdTA, PEdTB et 10 et d'autre part les résistances aux pressions d'éclatement des pneumatiques P1 à P3 et 10 en gonflant chaque pneumatique testé et en mesurant la pression jusqu'à la pression d'éclatement.

**On** a testé ensuite la résistance à la fatigue en compression, en d'autres termes l'endurance en compression, d'un pneumatique 10 par rapport à celle des pneumatiques PEdTA, PEdTB, P1 à P3. Les pneumatiques PEdTA, PEdTB, P1 à P3 ne sont pas conformes à l'invention. Afin d'évaluer l'endurance, on a fait rouler chaque pneumatique testé sur une distance ici 150 km et une vitesse déterminée ici à 70 km/h avec un couple freineur important et sous forte charge, ici 280 daN à la pression de 2,3 bars. On a ensuite comparé entre elles les forces à rupture résiduelles des renforts de frettage des différents pneumatiques.

Enfin, on a évalué le coût matière en comparant le coût des brins d'aramide et de nylon en les multipliant par leur densité dans la nappe de frettage pour avoir le coût rapporté à la surface en mètre carré de nappe de frettage.

**On** a rassemblé les résultats dans le tableau 2 ci-dessous.

La mention NT indique que le pneumatique n'a pas été testé.

**On** a indiqué dans le tableau 2, le maintien du profil des pneumatiques testés. Un très mauvais maintien du profil est indiquée par le signe « -- » et un mauvais maintien du profil est indiquée par le signe « - ». Un bon maintien du profil est indiquée par le signe « + ». Un très bon maintien du profil est indiquée par le signe « ++ ».

**De** la même façon, on a indiqué la résistance à la pression d'éclatement, l'endurance et le gain en coût matière des pneumatiques testés : très mauvais est indiqué par le signe « -- », mauvais est indiqué par le signe « - », bon est indiqué par le signe « + » et très bon est indiqué par le signe « ++ ».

| Elément de renfort | EdTA | EdTB | E1 | E2 | E3 | 44 |
|---|---|---|---|---|---|---|
| Nappe de frettage | NdTA | NdTB | N1 | N2 | N3 | 19 |
| Pneumatique | PEdTA | PEdTB | P1 | P2 | P3 | 10 |
| Maintien du profil | ++ | ++ | ++ | - | -- | ++ |
| Pression d'éclatement | ++ | ++ | + | + | -- | ++ |
| Facilité d'expansion radiale | -- | -- | - | - | + | ++ |
| Test Endurance en compression | + | + | -- | -- | ++ | ++ |
| Coût matière | -- | -- | ++ | ++ | ++ | ++ |

### Tableau 2

**Ces** résultats montrent que le pneumatique 10 selon l'invention présente à la fois un très bon maintien du profil et une très bonne résistance à la pression d'éclatement équivalente aux pneumatiques de l'état de la technique PEdTA et PEdTB et qui plus est, une endurance significativement plus élevée ainsi qu'un gain en coût matière significatif par rapport aux pneumatiques de l'état de la technique PEdTA et PEdTB .

De plus, par rapport aux pneumatiques témoins P1 et P2, on constate notamment que le pneumatique 10 possède une endurance en compression significativement plus élevée. Cette excellente endurance est le résultat de la combinaison entre le facteur de torsion K allant de 5,5 à 6,5 et de l'utilisation d'un brin multifilamentaire de polyamide aliphatique. A endurance équivalente, on constate que le pneumatique P3 n'a pas un bon maintien du profil ni une bonne résistance à la pression d'éclatement alors que le pneumatique 10 valide tous ces critères.

Enfin par rapport aux pneumatiques témoins P1 et P2 et E1 à E3 on constate notamment que le pneumatique 10 possède une facilité d'expansion radiale beaucoup plus aisée ce qui le rend moins dépendant de la variabilité de l'étape de cuisson.

Le pneumatique 10 selon l'invention tout en conservant à la fois un très bon maintien du profil et une très bonne résistance à la pression d'éclatement présente donc une endurance améliorée tout ayant un gain en coût matière nettement amélioré et permettant une expansion radiale aisée et moins dépendante de la variabilité de l'étape de cuisson.

Ainsi, comme le montrent les essais comparatifs ci-dessus, l'invention consiste bien en un pneumatique comprenant des éléments de renfort de frettage constitué d'un brin multifilamentaire de polyamide aromatique ou copolyamide aromatique, et d'un brin multifilamentaire de polyamide aliphatique, les deux brins étant enroulés en hélice l'un autour de l'autre et l'élément de renfort de frettage étant équilibré en torsions, le facteur de torsion K de l'élément de renfort de frettage allant de 5,5 à 6,5 et le pneumatique est obtenu par un procédé comprenant une étape de fabrication de la nappe de frettage dans laquelle on noie le ou les éléments de renfort de frettage adhérisé dans une composition polymérique pour former la nappe de frettage crue, le module initial en extension équivalent de la nappe de frettage crue allant de 330 à 620 cN/tex/dm.

L'invention ne se limite pas aux modes de réalisation précédemment décrits.

On pourra également combiner les caractéristiques des différents modes de réalisation et variantes décrits ou envisagés ci-dessus sous réserve que celles-ci soient compatibles entre elles et conformes à l'invention telle que définie dans les revendications ci-jointes.

### Revendications

1. Pneumatique pour véhicules à deux roues (10) comprenant un sommet (12) comprenant :

  - une bande de roulement (20), et
  - une armature de frettage (17) s'étendant dans le sommet (12) selon une direction circonférentielle (Z) du pneumatique (10), l'armature de frettage (17) comprenant au moins une nappe de frettage (19) comprenant un ou plusieurs éléments de renfort de frettage (44), le ou chaque élément de renfort de frettage (44) formant un angle strictement inférieur à 10° avec la direction circonférentielle (Z) du pneumatique, chaque élément de renfort de frettage (44) comprenant un assemblage constitué :

• d'un brin multifilamentaire de polyamide aromatique ou copolyamide aromatique (47), et
• d'un brin multifilamentaire de polyamide aliphatique (48), les deux brins étant enroulés en hélice l'un autour de l'autre et l'élément de renfort de frettage (44) étant équilibré en torsions, **caractérisé en ce que** le facteur de torsion K de l'élément de renfort de frettage (44) va de 5,5 à 6,5 avec K défini par la formule :

$K = (R \times T_i^{1/2}) / 957$ dans laquelle R est la torsion de l'élément de renfort de frettage (44) exprimée en tours par mètre, $T_i$ est la somme des titres des brins multifilamentaires de l'élément de renfort de frettage en tex,

et **en ce que** le pneumatique (10) est obtenu par un procédé comprenant une étape de fabrication de la nappe de frettage (19) dans laquelle on noie le ou les éléments de renfort de frettage adhérisé (44) dans une composition polymérique pour former la nappe de frettage crue, le module initial en extension équivalent de la nappe de frettage crue allant de 330 à 620 cN/tex/dm ;

avec le module initial en extension équivalent de la nappe de frettage crue étant calculé en multipliant le module initial en extension de l'élément de renfort de frettage adhérisé en cN/tex par la densité de la nappe de frettage en nombre de fils d'éléments de renfort de frettage par décimètre et ;

avec le module initial en extension de l'élément de renfort de frettage adhérisé étant la pente à l'origine de la partie linéaire de la courbe Force-Allongement obtenue dans les conditions de la norme ASTM D 885/D 885M - 10a de 2014, qui intervient juste après une prétension standard de 0,5 cN/tex de l'élément de renfort de frettage.

2. Pneumatique (10) selon la revendication précédente, dans lequel le facteur de torsion K de l'élément de renfort de frettage (44) va de 5,7 à 6,4, de préférence de 5,9 à 6,3 et plus préférentiellement de 6,0 à 6,2.

3. Pneumatique (10) selon l'une quelconque des revendications précédentes, dans lequel le module initial en extension équivalent de la nappe de frettage crue va de 380 à 600 cN/tex/dm et de préférence de 400 à 550 cN/tex/dm et plus préférentiellement de 420 à 520 cN/tex/dm.

4. Pneumatique (10) selon l'une quelconque des revendications précédentes, dans lequel la torsion de l'élément de renfort de frettage (44) va de 240 à 350 tours par mètre et de préférence de 240 à 300 tours par mètre.

5. Pneumatique (10) selon l'une quelconque des revendications précédentes, dans lequel le module initial en extension de l'élément de renfort de frettage adhérisé (44) va de 4,5 à 6,2 cN/tex et de préférence de 4,6 à 6,0 cN/tex.

6. Pneumatique (10) selon l'une quelconque des revendications précédentes, dans lequel la densité d'éléments de renfort de frettage (44) dans la nappe de frettage (19) va de 60 à 110 éléments de renfort de frettage (44) par décimètre de nappe de frettage (19), de préférence de 75 à 105 éléments de renfort de frettage (44) par décimètre de nappe de frettage (19) et plus préférentiellement de 85 à 95 éléments de renfort de frettage (44) par décimètre de nappe de frettage (19).

7. Pneumatique (10) selon l'une quelconque des revendications précédentes, comprenant deux flancs (22), deux bourrelets (24), chaque flanc (22) reliant chaque bourrelet (24) au sommet (12), une armature de carcasse (32) agencée radialement à l'intérieur du sommet (12), l'armature de carcasse (32) comprenant au moins une nappe de carcasse (34) ancrée dans chacun des bourrelets (24) et s'étendant dans les flancs (22), dans lequel l'armature de frettage (17) est radialement intercalée entre l'armature de carcasse (32) et la bande de roulement (20).

8. Pneumatique (10) selon la revendication précédente, dans lequel l'armature de frettage (17) est directement au contact de la bande de roulement (20) et de l'armature de carcasse (17).

9. Pneumatique (10) selon l'une quelconque des revendications précédentes, dans lequel le taux de courbure va de 0,15 à 0,40 et de préférence de 0,20 à 0,30.

10. Pneumatique (10) selon l'une quelconque des revendications précédentes, dans lequel le rapport de la hauteur d selon laquelle la nappe de frettage (19) s'étend radialement dans le pneumatique (10) sur la hauteur D selon laquelle le pneumatique (10) s'étend radialement est supérieur ou égal à 10% et de préférence supérieur ou égal à 20%.

11. Pneumatique (10) selon l'une quelconque des revendications précédentes, dans lequel l'armature de frettage (17) est constituée d'une seule nappe de frettage (19).

12. Pneumatique (10) selon l'une quelconque des revendications précédentes, dans lequel le ou chaque élément de renfort de frettage (44) fait un angle inférieur ou égal à 7° et de préférence inférieur ou égal à 5° avec la direction circonférentielle du pneumatique.

13. Pneumatique (10) selon l'une quelconque des revendications 1 à 12, dans lequel l'armature de carcasse (32) est constituée de deux nappes de carcasse (34,35).

14. Pneumatique (10) selon l'une quelconque des revendications 1 à 12, dans lequel l'armature de carcasse (32) est constituée d'une seule nappe de carcasse (34).

15. Pneumatique (10) selon l'une quelconque des revendications précédentes, dans lequel la nappe de carcasse (34) comprend au moins un élément de renfort de carcasse, l'angle de chaque élément renfort de carcasse va de 65° à 90° avec la direction circonférentielle du pneumatique.

## Patentansprüche

1. Reifen für Zweiradfahrzeuge (10), der einen Scheitel (12) beinhaltet, der Folgendes beinhaltet:

   - eine Lauffläche (20) und
   - eine Umreifungsbewehrung (17), die sich gemäß einer Umfangsrichtung (Z) des Reifens (10) in dem Scheitel (12) erstreckt, wobei die Umreifungsbewehrung (17) mindestens eine Umreifungslage (19) beinhaltet, die ein oder mehrere Umreifungsverstärkungselemente (44) beinhaltet, wobei das oder jedes Umreifungsverstärkungselement (44) mit der Umfangsrichtung (Z) des Reifens einen Winkel bildet, der in jedem Fall kleiner als 10° ist, wobei jedes Umreifungsverstärkungselement (44) eine Anordnung beinhaltet, die aus Folgendem besteht:

   • einer Multifilamentfaser aus aromatischem Polyamid oder aromatischem Copolyamid (47) und
   • einer Multifilamentfaser aus aliphatischem Polyamid (48),

   wobei die zwei Fasern schraubenförmig umeinander gewickelt sind und das Umreifungsverstärkungselement (44) torsionsmäßig ausgeglichen ist, **dadurch gekennzeichnet, dass** der Torsionsfaktor K des Umreifungsverstärkungselements (44) 5,5 bis 6,5 beträgt, wobei K durch die folgende Formel definiert ist:

   $K = (R \times Ti^{1/2}) / 957$, wobei R die Torsion des Umreifungsverstärkungselements (44), ausgedrückt in Touren pro Meter, ist, Ti die Summe der Titer der Multifilamentfasern des Umreifungsverstärkungselements in tex ist, und dass der Reifen (10) durch ein Verfahren erhalten wird, das einen Schritt der Fertigung der Umreifungslage (19) beinhaltet, bei dem das oder die mit einem Haftmittel versehenen Umreifungsverstärkungselemente (44) in eine Polymerzusammensetzung getaucht werden, um die rohe Umreifungslage zu bilden, wobei der anfängliche äquivalente Elastizitätsmodul der rohen Umreifungslage 330 bis 620 cN/tex/dm beträgt; wobei der anfängliche äquivalente Elastizitätsmodul der rohen Umreifungslage berechnet wird, indem der anfängliche Elastizitätsmodul des mit einem Haftmittel versehenen Umreifungsverstärkungselements in cN/tex mit der Dichte der Umreifungslage in Anzahl Umreifungsverstärkungselementfasern pro Dezimeter multipliziert wird, und; wobei der anfängliche Elastizitätsmodul des mit einem Haftmittel versehenen Umreifungsverstärkungselements die Steigung am Anfang des linearen Teils der Kraft-Dehnungs-Kurve, die unter den Bedingungen der Norm ASTM D 885/D 885M - 10a von 2014 erhalten wird, ist, der direkt auf eine standardmäßige Vorspannung von 0,5 cN/tex des Umreifungsverstärkungselements folgt.

2. Reifen (10) nach dem vorhergehenden Anspruch, wobei der Torsionsfaktor K des Umreifungsverstärkungselements (44) 5,7 bis 6,4, vorzugsweise 5,9 bis 6,3 und noch bevorzugter 6,0 bis 6,2 beträgt.

3. Reifen (10) nach einem beliebigen der vorhergehenden Ansprüche, wobei der anfängliche äquivalente Elastizitätsmodul der rohen Umreifungslage 380 bis 600 cN/tex/dm und vorzugsweise 400 bis 550 cN/tex/dm und noch bevorzugter 420 bis 520 cN/tex/dm beträgt.

4. Reifen (10) nach einem beliebigen der vorhergehenden Ansprüche, wobei die Torsion des Umreifungsverstärkungselements (44) 240 bis 350 Touren pro Meter und vorzugsweise 240 bis 300 Touren pro Meter beträgt.

5. Reifen (10) nach einem beliebigen der vorhergehenden Ansprüche, wobei der anfängliche Elastizitätsmodul des mit einem Haftmittel versehenen Umreifungsverstärkungselements (44) 4,5 bis 6,2 cN/tex und vorzugsweise 4,6 bis 6,0 cN/tex beträgt.

6. Reifen (10) nach einem beliebigen der vorhergehenden Ansprüche, wobei die Dichte von Umreifungsverstärkungselementen (44) in der Umreifungslage (19) 60 bis 110 Umreifungsverstärkungselemente (44) pro Dezimeter Umreifungslage (19), vorzugsweise 75 bis 105 Umreifungsverstärkungselemente (44) pro Dezimeter Umreifungslage (19) und noch bevorzugter 85 bis 95 Umreifungsverstärkungselemente (44) pro Dezimeter Umreifungslage (19) beträgt.

7. Reifen (10) nach einem beliebigen der vorhergehenden Ansprüche, der Folgendes beinhaltet: zwei Flanken (22), zwei Wülste (24), wobei jede Flanke (22) jeden Wulst (24) mit dem Scheitel (12) verbindet, eine Karkassenbewehrung (32), die zu dem Scheitel (12) radial innenliegend angeordnet ist, wobei die Karkassenbewehrung (32) mindestens eine Karkassenlage (34) beinhaltet, die in jedem der Wülste (24) verankert ist und sich in die Flanken (22) erstreckt, wobei die Umreifungsbewehrung (17) zwischen die Karkassenbewehrung (32) und die Lauffläche (20) radial eingefügt ist.

8. Reifen (10) nach dem vorhergehenden Anspruch, wobei die Umreifungsbewehrung (17) in direktem Kontakt mit der Lauffläche (20) und der Karkassenbewehrung (17) steht.

9. Reifen (10) nach einem beliebigen der vorhergehenden Ansprüche, wobei die Krümmungsrate 0,15 bis 0,40 und vorzugsweise 0,20 bis 0,30 beträgt.

10. Reifen (10) nach einem beliebigen der vorhergehenden Ansprüche, wo das Verhältnis zwischen der Höhe d, gemäß der sich die Umreifungslage (19) in dem Reifen (10) radial erstreckt, und der Höhe D, gemäß der sich der Reifen (10) radial erstreckt, größer als oder gleich 10 % und vorzugsweise größer als oder gleich 20 % ist.

11. Reifen (10) nach einem beliebigen der vorhergehenden Ansprüche, wobei die Umreifungsbewehrung (17) aus einer einzigen Umreifungslage (19) besteht.

12. Reifen (10) nach einem beliebigen der vorhergehenden Ansprüche, wobei das oder jedes Umreifungsverstärkungselement (44) mit der Umfangsrichtung des Reifens einen Winkel kleiner als oder gleich 7° und vorzugsweise kleiner als oder gleich 5° bildet.

13. Reifen (10) nach einem beliebigen der Ansprüche 1 bis 12, wobei die Karkassenbewehrung (32) aus zwei Karkassenlagen (34, 35) besteht.

14. Reifen (10) nach einem beliebigen der Ansprüche 1 bis 12, wobei die Karkassenbewehrung (32) aus einer einzigen Karkassenlage (34) besteht.

15. Reifen (10) nach einem beliebigen der vorhergehenden Ansprüche, wobei die Karkassenlage (34) mindestens ein Karkassenverstärkungselement beinhaltet, wobei der Winkel jedes Karkassenverstärkungselements mit der Umfangsrichtung des Reifens 65° bis 90° beträgt.

**Claims**

1. Tyre (10) for two-wheeled vehicles, comprising a crown (12) comprising:

   - a tread (20), and
   - a hoop reinforcement (17) extending in the crown (12) in a circumferential direction (Z) of the tyre (10), the hoop reinforcement (17) comprising at least one hooping ply (19) comprising one or more hoop reinforcing elements (44), the or each hoop reinforcing element (44) forming an angle strictly less than 10° with the circumferential direction (Z) of the tyre, each hoop reinforcing element (44) comprising an assembly made up:

- of a multifilament strand of aromatic polyamide or aromatic copolyamide (47), and
- of a multifilament strand of aliphatic polyamide (48),

the two strands being wound in a helix around one another and the hoop reinforcing element (44) being twist-balanced, **characterized in that** the twist factor K of the hoop reinforcing element (44) is ranging from 5.5 to 6.5 with K being defined by the formula:

$K = (R \times Ti^{1/2})/957$, in which R is the twist of the hoop reinforcing element (44) expressed in turns per metre and Ti is the sum of the counts of the multifilament strands of the hoop reinforcing element in tex, and **in that** the tyre (10) is obtained by a method comprising a step of manufacturing the hooping ply (19), in which the bonded hoop reinforcing element(s) (44) is/are embedded in a polymer composition in order to form the uncured hooping ply, the equivalent initial tensile modulus of the uncured hooping ply ranging from 330 to 620 cN/tex/dm.

2. Tyre (10) according to the preceding claim, wherein the twist factor K of the hoop reinforcing element (44) ranges from 5.7 to 6.4, preferably from 5.9 to 6.3, and more preferably from 6.0 to 6.2.

3. Tyre (10) according to either one of the preceding claims, wherein the equivalent initial tensile modulus of the uncured hooping ply ranges from 380 to 600 cN/tex/dm, preferably from 400 to 550 cN/tex/dm, and more preferably from 420 to 520 cN/tex/dm.

4. Tyre (10) according to any one of the preceding claims, wherein the twist of the hoop reinforcing element (44) ranges from 240 to 350 turns per metre, and preferably from 240 to 300 turns per metre.

5. Tyre (10) according to any one of the preceding claims, wherein the initial tensile modulus of the bonded hoop reinforcing element (44) ranges from 4.5 to 6.2 cN/tex, and preferably from 4.6 to 6.0 cN/tex.

6. Tyre (10) according to any one of the preceding claims, wherein the density of hoop reinforcing elements (44) in the hooping ply (19) ranges from 60 to 110 hoop reinforcing elements (44) per decimetre of hooping ply (19), preferably from 75 to 105 hoop reinforcing elements (44) per decimetre of hooping ply (19), and more preferably from 85 to 95 hoop reinforcing elements (44) per decimetre of hooping ply (19).

7. Tyre (10) according to any one of the preceding claims, comprising two sidewalls (22), two beads (24), each sidewall (22) connecting each bead (24) to the crown (12), a carcass reinforcement (32) arranged radially on the inside of the crown (12), the carcass reinforcement (32) comprising at least one carcass ply (34) that is anchored in each of the beads (24) and extends in the sidewalls (22), wherein the hoop reinforcement (17) is radially interposed between the carcass reinforcement (32) and the tread (20).

8. Tyre (10) according to the preceding claim, wherein the hoop reinforcement (17) is directly in contact with the tread (20) and the carcass reinforcement (17).

9. Tyre (10) according to any one of the preceding claims, wherein the degree of curvature ranges from 0.15 to 0.40, and preferably from 0.20 to 0.30.

10. Tyre (10) according to any one of the preceding claims, wherein the ratio of the height d at which the hooping ply (19) extends radially in the tyre (10) to the height D at which the tyre (10) extends radially is greater than or equal to 10%, and preferably greater than or equal to 20%.

11. Tyre (10) according to any one of the preceding claims, wherein the hoop reinforcement (17) is made up of a single hooping ply (19).

12. Tyre (10) according to any one of the preceding claims, wherein the or each hoop reinforcing element (44) makes an angle less than or equal to 7°, and preferably less than or equal to 5°, with the circumferential direction of the tyre.

13. Tyre (10) according to any one of Claims 1 to 12, wherein the carcass reinforcement (32) is made up of two carcass plies (34, 35).

14. Tyre (10) according to any one of Claims 1 to 12, wherein the carcass reinforcement (32) is made up of a single carcass ply (34).

15. Tyre (10) according to any one of the preceding claims, wherein the carcass ply (34) comprises at least one carcass reinforcing element, the angle of each carcass reinforcing element with the circumferential direction of the tyre ranging from 65° to 90°.

Fig. 1

FIG. 2

Fig. 3

EP 3 880 492 B1

## RÉFÉRENCES CITÉES DANS LA DESCRIPTION

**Documents brevets cités dans la description**

- WO 2016156263 A
- EP 1623819 A
- FR 1413102

**Littérature non-brevet citée dans la description**

- Standards Manual. ETRTO (European Tyre and Rim Technical Organisation), 2017, 29
- Standards Manual. ETRTO (European Tyre and Rim Technical Organisation), 2017, 6